# EUROPEAN PATENT SPECIFICATION

(11) **EP 0 624 790 B1**
(45) Date of publication and mention of the grant of the patent: **21.07.1999**
(21) Application number: 94201058.8
(22) Date of filing: 18.04.1994
(51) Int. Cl.: G01N 27/407, G01N 27/12

(54) **Exhaust sensor with removable electrical connection**
Abgassensor mit trennbarem elektrischen Verbinder
Capteur de gaz d'échappement avec connecteur électrique séparable

(30) Priority: 11.05.1993 US 59399
(43) Date of publication of application: 17.11.1994
(73) Proprietor: GENERAL MOTORS CORPORATION, Detroit Michigan 48202 (US)
(72) Inventor: Quinn, David Brian, Grand Blanc, Michigan 48439 (US); McCauley, Kathryn Mary, Durand, Michigan 48429 (US); Duce, Richard William, Flushing, Michigan 48433 (US)
(74) Representative: Denton, Michael John

(56) References cited:
- EP-A- 0 364 315
- EP-A- 0 398 625
- US-A- 4 469 626
- PATENT ABSTRACTS OF JAPAN vol. 015, no. 433 (P-1271) 5 November 1991 & JP-A-03 180 748 (NGK SPARK PLUG CO LTD) 6 August 1991 & DATABASE WPI Section Ch, Week 9137, Derwent Publications Ltd., London, GB; Class J04, AN 91-271867

## Description

This invention relates to gas sensors, and more particularly to automotive exhaust oxygen sensors having electrical connectors.

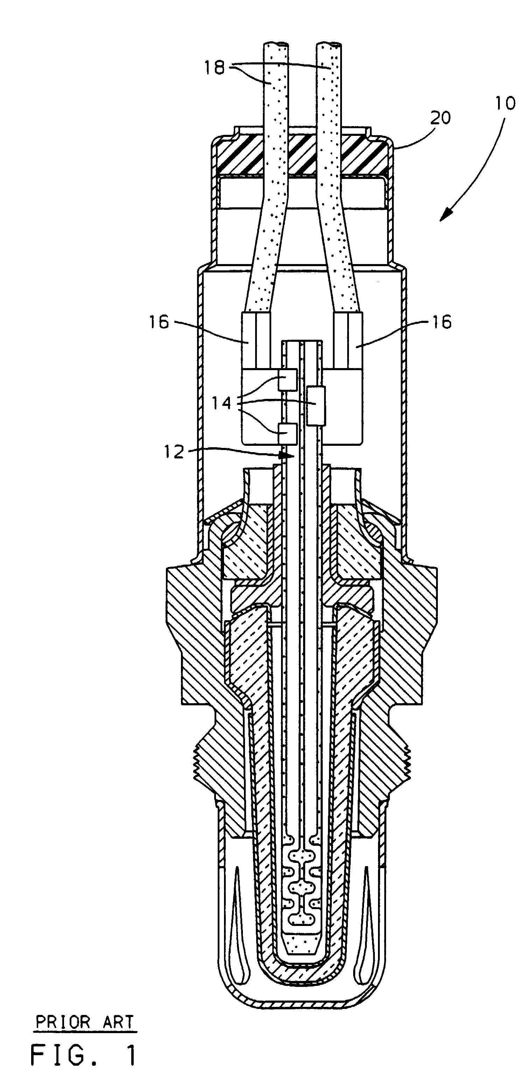

Automotive exhaust oxygen sensors have elements such as electrodes or heaters, which require a supply of electricity for the operation thereof. Figure 1 of the accompanying drawings illustrates a prior oxygen sensor 10 in which electrical power is provided to a sensing element or a heater 12 through permanent crimped contacts. The contacts have a terminal pad 14 permanently connected, e.g., soldered to the body of the sensor or to an associated terminal pad on the heater. The contact at the other end includes a crimped portion 16 which surrounds and contacts a wire 18 supplying electrical power to the component. The wire 18 then extends through a housing body 20 and is connected to an external power source. Assembling such a sensor requires the sensor body to be permanently attached to a link of cable with an interface connector. That assembly process is extremely difficult and thus is undesirable. Many added steps and special tools are required to connect a sensor with an attached harness to a manifold boss. The attached harness assemblies can tangle and nest together making it difficult to pull out one sensor from a bulk load. Two hands are required to screw the sensor into a manifold to prevent the wires from tangling. A special tool designed to fit around the harness assembly and wires is required to tighten the sensor into a boss on the manifold. Furthermore, the wires must be secured to the engine prior to installation of the sensor into the vehicle so that damage to the wires and the vehicle interface connector is prevented.

EP-A-0 364 315 discloses a sensor in accordance with the preamble of Claim 1. EP-A-0 398 625 and US-A-4 469 626 disclose similar arrangements.

The present invention overcomes the deficiencies of these prior oxygen sensors.

An automotive exhaust gas sensor according to the present invention is characterised over EP-A-0 364 315 by the features specified in the characterising portion of claim 1.

The invention relates to an automotive exhaust gas oxygen sensor including a component requiring electricity to operate, such as a heater or electrode. A first electrical terminal having at least one male prong is provided in electrical contact with the component. A second electrical terminal is provided in contact with a wire for delivering electrical power from an external source. The second electrical terminal has at least one female receptacle for receiving a corresponding male prong of the first electrical terminal. The male prong and the female receptacle are constructed and arranged so at least one of the first and second electrical terminals is removable with respect to the other terminal. The removable electrical connector greatly improves the ease of assembly and repair of the oxygen sensor.

These and other objects, features and advantages and embodiments of the present invention will be apparent from the following detailed description, appended claims and accompanying drawings, in which:
Figure 1 illustrates a prior exhaust oxygen sensor;
Figure 2 illustrates a gas sensor according to the present invention;
Figure 3 is a sectional exploded view of the gas sensor of Figure 2, taken along line 3-3 of Figure 2;
Figure 4 is a sectional view of the gas sensor of Figure 2, taken along line 4-4 of Figure 3;
Figure 5 is an exploded view of a flat plate oxygen sensor usable in the present invention;
Figure 6 is a sectional view of another embodiment of a gas sensor according to the present invention; and
Figure 7 is a sectional view of another embodiment of a gas sensor according to the present invention with a slidable hex nut.

Exhaust oxygen sensors are used in automobiles to determine the concentration of oxygen present in the exhaust gas of an internal combustion engine. By measuring the concentration of the oxygen content in the exhaust gas, various engine operating parameters can be adjusted to operate the engine for improved performance and limited environmental emissions. In general, exhaust oxygen sensors include a pair of electrodes positioned on opposite sides of an oxygen-permeable material such as an electrolyte body. As electricity is supplied to the electrodes, gas migrates through the oxygen permeable material. The rate of oxygen transfer through the permeable material is measured to determine the concentration of the oxygen in the exhaust gas. Often a heater is provided so that both reference oxygen and exhaust oxygen are maintained at a predetermined temperature. The electrode and the heater require electrical power to operate. The prior exhaust oxygen sensors included terminals permanently soldered to the sensor body or to a terminal pad on a heater as shown in Figure 1. Another portion of the terminal was crimped around a wire which was connected to an external power source. The disadvantages of such systems are outlined above.

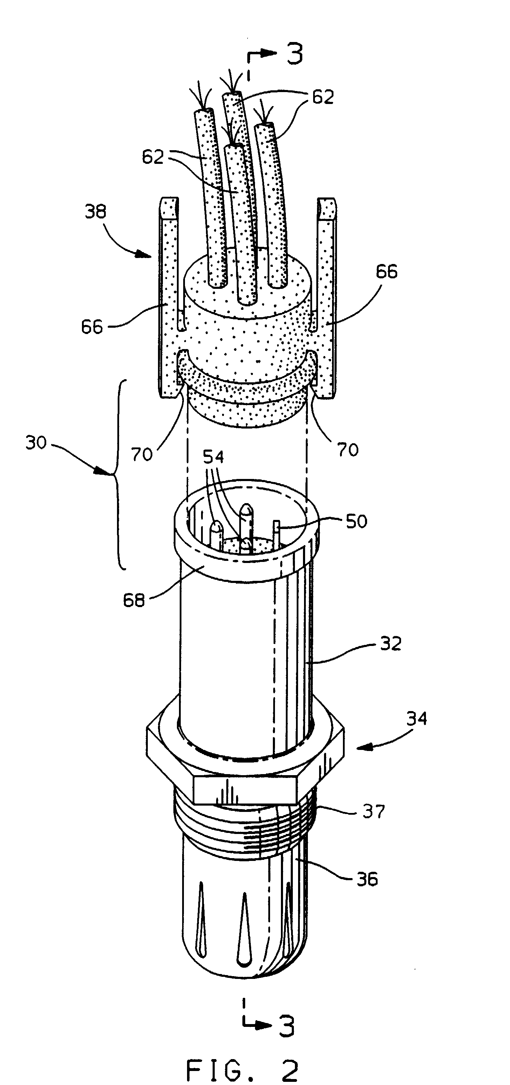

In contrast, Figures 2, 3 and 4 illustrate an exhaust oxygen sensor 30 according to the present invention. The oxygen sensor includes an upper shield 32, a body 34, a lower shield 36 and a cap 38 all connected together to form an oxygen sensor housing. The upper and lower shields 32, 36 are made from a tubular-shaped stainless steel material about 0.5 mm thick. The body is made from a stainless material about 2.5 mm thick at the smallest cross-section. The body has a threaded portion 37 on its outer surface near a lower end thereof, which threaded portion 37 may be threaded into a manifold boss. A heater element 40 and an oxygen-sensing element 42 are received in the housing and held in position by a cylindrical ceramic connector 44 and upper and lower glass seals 46, 48 which extend, respectively, from the shell to terminals 50 and to the flat plate oxygen-sensing element 42. The terminals 50 are provided for separate connections to first and second leads of the heater element 40; to the electrode of the oxygen-sensing element 42; and to a ground connection. The terminals each include a terminal pad 52 welded either to the heater element 40 or to the oxygen-sensing element 42. Male prongs 54 extend upwardly from each terminal pad 52. The male prongs 54 may be held in place by upper glass seal 46 or by a spacer-orienting alumina material (not shown), which acts as a terminal holder. A suitable glass seal for the holder includes fused alumina borosilicate glass. A second terminal is provided in the cap 38 with a corresponding female connector for each male prong. Each female connector includes a metal portion 56 defining a cavity 58 for receiving at least a portion of a respective male prong 54. Each female connector also includes a crimped portion 60 which is crimped around a wire 62 which extends out of the oxygen sensor housing to an external power source. The female connectors may be held in position by a seal plug 64 which is inserted into the oxygen sensor cap 38. The male prongs 54 and the female connectors may be made of any electrically-conductive material, for example, gold-plated stainless steel.

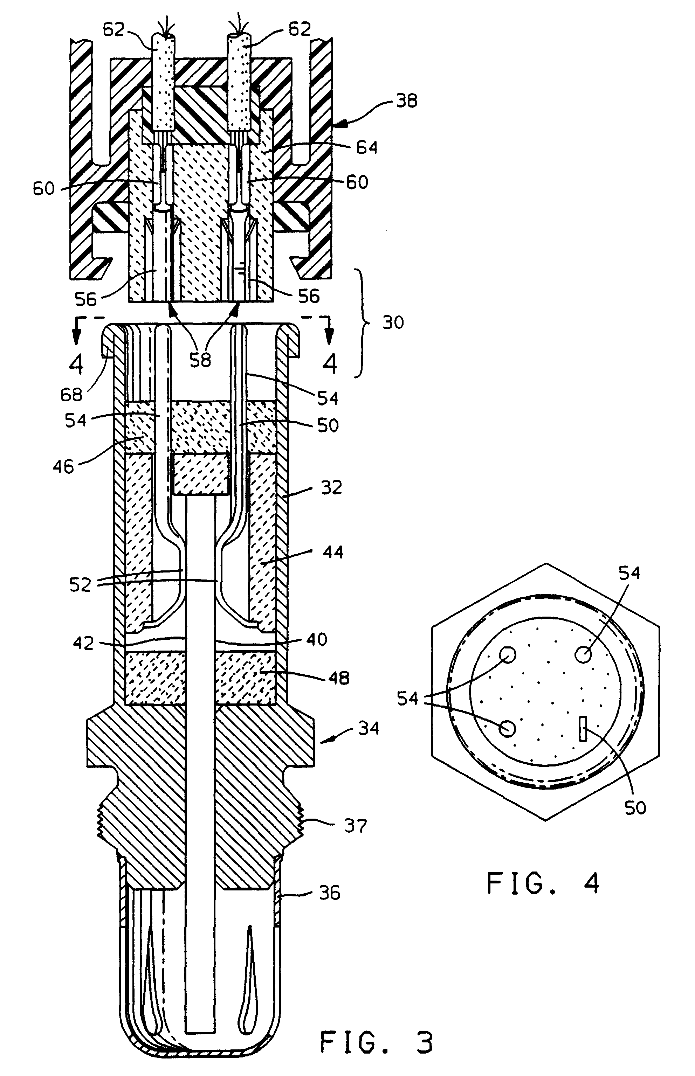

The orientation of the male prong and the female receptacle for each electrical terminal may be varied, and each terminal may have at least one male prong and female receptacle. The male prongs and female receptacles may be arranged on each electrical terminal so as to ensure that the terminals of the heater element and the oxygen-sensing element are always connected and assembled properly. As shown in Figure 4, the male prongs may have a variety of shapes including substantially a cylindrical or substantially rectangular shape in cross-section. The corresponding female receptacle is designed to define a cavity for receiving the particular shape of the corresponding male prong on the opposite terminal. Each male prong and the respective female receptacle are constructed and arranged so that one of the first and second electrical terminals is removable with respect to the other terminal.

As shown in Figures 2 and 3, the cap 38 includes a first resilient lock 66 for releasably locking the cap 38 onto a ridge 68 formed on the upper shield portion 32 of the sensor. The first resilient lock 66 includes inwardly-extending lips 70 which form resilient fingers at a lower edge of the cap 38. The cap 38 is pushed onto the upper shield 32 so that the first terminals in the oxygen sensor body and second terminal in the cap make electrical connection with one another, with the male prongs being received in respective female receptacles. The first resilient lock 66 of the cap 38 is pressure-fitted around the ridge 68 of the upper shield 32 to close the housing of the oxygen sensor. Thereafter, the cap 38 may be permanently secured to the upper shield 32 by welding, cement or other suitable means.

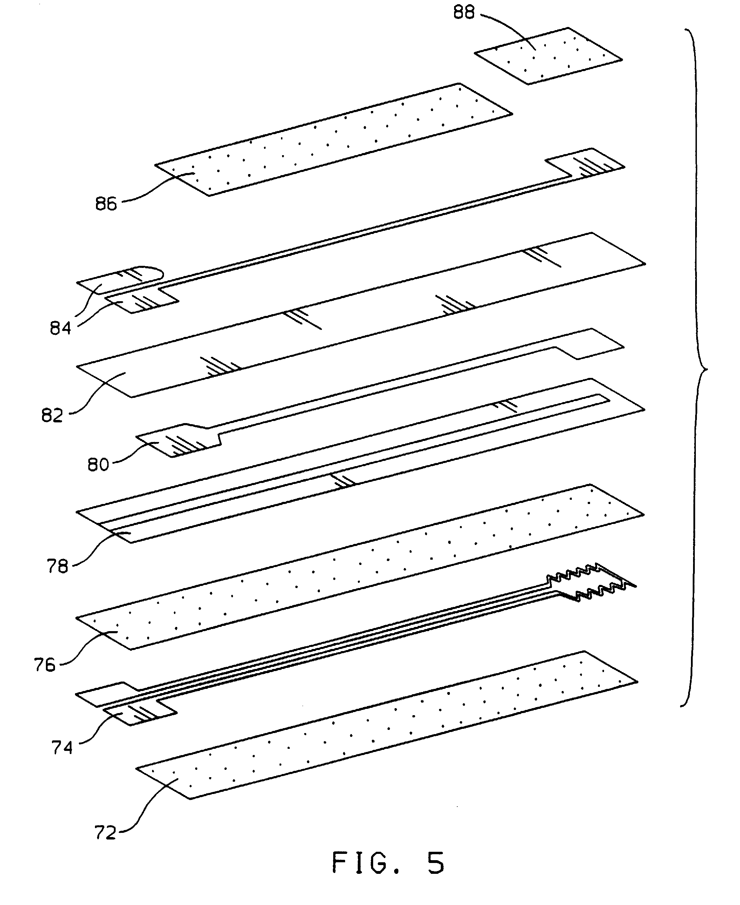

A variety of flat plate oxygen sensors are known to those skilled in the art which are suitable for use in the present invention. Figure 5 illustrates such a flat plate oxygen sensor which includes a series of laminated structures overlaying each other including, for example, a heater protective coat 72, a platinum heater 74, a heater insulating layer 76, a heater substrate 78, a platinum inner electrode 80, a zirconium electrode substrate (electrolyte body) 82, a platinum outer electrode 84, an electrode lead protective coat 86, and an electrode protective coat 88. The male prongs and female prongs described herein are arranged to make electrical connection to the platinum heater, and to the inner and outer platinum electrodes.

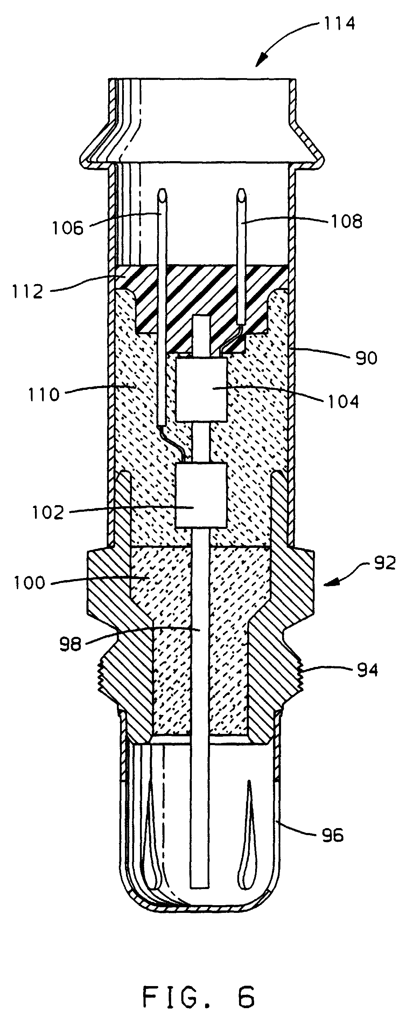

Figure 6 illustrates another embodiment of the present invention. This embodiment includes an upper tubularly-shaped shield 90, a hollow cylindrical metal body 92 having a threaded portion 94 near a lower end thereof, and a closed-end, tubularly-shaped lower shield 96, connected together to form an oxygen sensor housing. A flat plate oxygen sensor 98, comprising an oxygen-sensing element with a heater, is received in the housing and is held in position by cement 100 extending from an internal wall of the metal body 92 to the flat plate sensor 98. The flat plate oxygen-sensing element has electrical terminals 102, 104 connected thereto near an upper end thereof and male prongs 106, 108 extend upwardly therefrom. A glass seal 110 extends from an internal wall of the upper shield 90 to surround an upper portion of the flat plate oxygen-sensing element and the electrical terminals 102, 104. The male prongs 106, 108 are held in position by a spacer-orienting alumina ceramic member 112 extending from the internal wall of the upper shield 90 to the prongs 106, 108. A space 114 is provided in an upper portion of the upper shield 90 for receiving therein a rubber stopper (not shown) carrying an electrical terminal having female receptacles for receiving the male prongs 106, 108. Wires connect the female receptacles of the electrical terminal to an external power source.

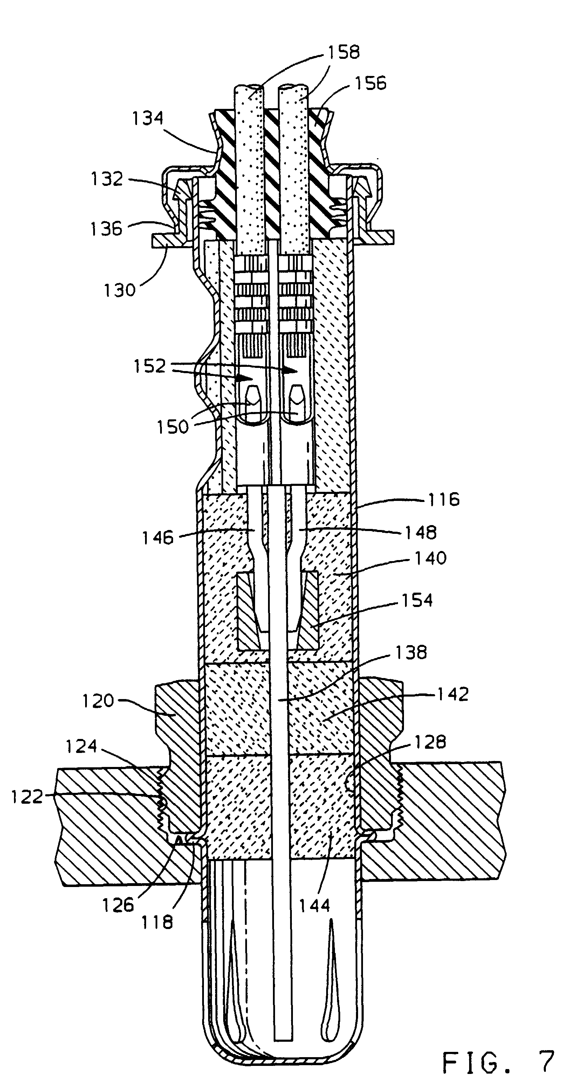

Figure 7 illustrates another embodiment of the present invention. This embodiment includes a single-piece tubular shell 116 made out of stainless steel material about 0.5 mm thick. The shell 116 has a crimped lip 118 formed near a lower portion of the shell. A ring-shaped hex nut 120 is slipped over the tubular shell 116 for engagement with the crimped lip 118. The hex nut 120 includes a threaded portion 122 engageable with a threaded boss 124 in the exhaust system. The crimped lip 118 on the shell prevents the oxygen sensor from being pushed in or pulled out of the boss 124. The hex nut 120 co-operates with a seat 126 formed in the boss 124 to prevent the oxygen sensor from being pushed too far into the boss. The crimped lip 118 on the shell 116 could be eliminated if the hex nut and shell are designed to provide a frictional fit between one another. The shell 116 could have, for example, a slightly larger diameter in a desired area 128 to provide the frictional fit. The nut 120 is threaded into the boss 124 to hold the sensor in place without the need to rotate the shell. This eliminates the need for special tools to assemble and install the sensor in the exhaust system.

A barbed ring 130 is slipped over the upper portion of the tubular shell 116 and includes a barb 132 for engaging the shell. A retainer 134, made out of stainless steel material about 0.5 mm thick, is slipped over the upper portion of the shell 116 and the barbed ring 130. The retainer 134 has inwardly-biased legs 136 for engaging the barbed ring 130 and sealing the upper portion of the oxygen sensor. A flat plate oxygen sensor 138 is housed in the shell 116 and is held in position by a first cement composition 140 surrounding an upper portion of the flat plate oxygen sensor 138; a glass seal 142 surrounding the middle portion of the oxygen sensor 138; and a second cement composition 144 surrounding a lower portion of the flat plate oxygen sensor 138. A suitable cement composition includes calcia alumina (calcium aluminate, 3 CaO Al₂O₃) and is available from Aremco Company, USA under the trade name Ceramcast 575™. A suitable glass seal composition includes glass frit and is available from Ferro Company, USA under the trade name 2876™. The first and second cement compositions 140, 144 firmly hold the flat plate oxygen sensor 138 in the shell 116 and the glass seal 142 allows for thermal expansion of the flat plate oxygen sensor 138.

First and second terminals 146, 148 are used to make electrical connection to the heater and flat plate electrodes of the oxygen sensor 138 by way of male prongs 150 and female receptacles 152 as described above. Two electrical connections are made to the heater portion of the flat plate oxygen sensor 138 as described above. One electrical connection is made to an inner electrode of the flat plate sensor 138. A fourth terminal is connected to an outer electrode of the oxygen sensor 138 to provide an isolated ground connection back to an electronic control module. A wedged ring 154 is positioned around the electrical connections to the flat plate oxygen sensor 138 to hold those connections in electrical contact with the flat plate oxygen sensor 138 whilst the cement composition 140 is curing. A Teflon^{(RTM)} seal 156 is provided within the retainer 134 and has holes formed therein to accommodate electrical cables 158 associated with the electrical connector female receptacles 152. The retainer 134, the barbed ring 130 and the Teflon seal 156 make the oxygen sensor 138 waterproof.

The disclosures in United States patent application no. 059,399, from which this application claims priority, and in the abstract accompanying this application are incorporated herein by reference.

## Claims

1. An automotive exhaust gas sensor (30) comprising: a component (42) requiring electrical power to operate; a first electrical terminal (50) in electrical contact with said component(42), and a second electrical terminal (60) in electrical contact with a wire (62) for delivering electrical power from an external source, one of said terminals (50,60) being provided with a male prong (54) and the others of said terminals being provided with a female receptacle (56,58); and said male prong (54) and said female receptacle (56,58) being constructed and arranged so that at least one of said terminals (56,60) is selectively removable with respect to the other; wherein the sensor (30) includes a cap (38), a shell (32,34) and a lower shield (36), said component (42) being carried in said shell (32,34); said second terminal (60) is housed in said cap (38) and said first terminal (50) is housed in said shell (32,34); characterised in that said cap (38) has a resilient locking finger (70) at a lower end thereof; said shell (32,34) has a ridge (68) at an upper end thereof; and the resilient locking finger (70) of the cap (38) is pressure-fitted around the ridge (68) of the shell (32,34) when the first and second terminals (50,60) are in electrical contact with one another.

2. An automotive exhaust gas sensor (30) according to claim 1, in which the sensor (30) includes a holder (44,46) for permanently holding said male prong (54) in a predetermined position.

3. An automotive exhaust gas sensor (30) according to claim 2, in which said holder is a glass seal (44) surrounding a portion of said male prong (54.

4. An automotive exhaust gas sensor (30) according to claim 3, in which said glass seal (44) comprises fused alumina borosilicate glass.

5. An automotive exhaust gas sensor (30) according to any of the preceding claims, in which said female receptacle (56,58) further comprises a first portion (60) secured to said wire (62).

6. An automotive exhaust gas sensor (30) according to claim 1, in which said male prong (54) has a substantially cylindrical shape and said female receptacle (56,58) defines a cavity (58) for receiving a portion of said male prong (54).

7. An automotive exhaust gas sensor (30) according to claim 1, in which said male prong (50) has a cross-sectional area which has a substantially rectangular shape and said female receptacle (56,58) defines a cavity (58) for receiving at least a portion of said male prong (50).

8. An automotive exhaust gas sensor (30) according to claim 1, in which the sensor (30) includes a heater (40) having first and second electrical leads requiring electrical power to operate; said first electrical terminal has first and second male prongs (54) electrically connected with said first and second electrical leads respectively; and said second electrical terminal includes first and second female receptacles (56,58) each of which is in electrical contact with an associated wire (62) for delivering electricity from said external source.

9. An automotive exhaust gas sensor (30) according to claim 8, in which the sensor (30) includes an oxygen-sensing element (42) having an electrode; said first electrical terminal further comprises a third male prong (54) in electrical contact with said oxygen-sensing element electrode; said second electrical terminal further comprises a third female receptacle (56,58) in electrical contact with a third wire for delivering electricity from said external source, and wherein all of said male prongs (54) and all of said female receptacles (56,58) are constructed and arranged so that at least one of said first and second electrical terminals is removable with respect to the other.

## Patentansprüche

1. Abgassensor für ein Kraftfahrzeug (30), umfassend: ein Bauteil (42), das zum Betrieb elektrische Energie benötigt, eine erste elektrische Klemme (50), die in elektrischem Kontakt mit dem Bauteil (42) steht, und eine zweite elektrische Klemme (60), die in elektrischem Kontakt mit einem Draht (62) steht, um elektrische Energie von einer externen Quelle zu liefern, wobei eine der Klemmen (50, 60) mit einer Steckerzinke (54) versehen ist und die anderen der Klemmen mit einer Buchsenaufnahme (56, 58) versehen sind, und wobei die Stekkerzinke (54) und die Buchsenaufnahme (56, 58) derart aufgebaut und angeordnet sind, daß mindestens eine der Klemmen (56, 60) selektiv in bezug auf die andere entfernbar ist, wobei der Sensor (30) einen Deckel (38), einen Mantel (32, 34) und eine untere Abschirmung (36) umfaßt, wobei das Bauteil (42) in dem Mantel (32, 34) getragen ist, wobei die zweite Klemme (60) in dem Deckel (38) untergebracht ist und die erste Klemme (50) in dem Mantel (32, 34) untergebracht ist, dadurch gekennzeichnet, daß der Deckel (38) einen elastischen Verriegelungsfinger (70) an einem unteren Ende von diesem aufweist, daß der Mantel (32, 34) einen Steg (68) an einem oberen Ende von diesem aufweist, und daß der elastische Verriegelungsfinger (70) des Deckels (38) um den Steg (68) des Mantels (32, 34) herum preßgepaßt ist, wenn die ersten und zweiten Klemmen (50, 60) miteinander in elektrischem Kontakt stehen.

2. Abgassensor für ein Kraftfahrzeug (30) nach Anspruch 1, wobei der Sensor (30) einen Halter (44, 46) umfaßt, um die Steckerzinke (54) permanent in einer vorbestimmten Position zu halten.

3. Abgassensor für ein Kraftfahrzeug (30) nach Anspruch 2, wobei der Halter eine Glasdichtung (44) ist, die einen Teil der Steckerzinke (54) umgibt.

4. Abgassensor für ein Kraftfahrzeug (30) nach Anspruch 3, wobei die Glasdichtung (44) schmelzgeformtes Aluminiumoxidborsilikatglas umfaßt.

5. Abgassensor für ein Kraftfahrzeug (30) nach einem der vorhergehenden Ansprüche, wobei die Buchsenaufnahme (56, 58) ferner einen ersten Teil (60) umfaßt, der an dem Draht (62) befestigt ist.

6. Abgassensor für ein Kraftfahrzeug (30) nach Anspruch 1, wobei die Steckerzinke (54) eine im wesentlichen zylindrische Form aufweist und die Buchsenaufnahme (56, 58) einen Hohlraum (58) festlegt, um einen Teil der Steckerzinke (54) aufzunehmen.

7. Abgassensor für ein Kraftfahrzeug (30) nach Anspruch 1, wobei die Steckerzinke (50) eine Querschnittsfläche aufweist, die eine im wesentlichen rechteckige Form aufweist, und wobei die Buchsenaufnahme (56, 58) einen Hohlraum (58) festlegt, um mindestens einen Teil der Steckerzinke (50) aufzunehmen.

8. Abgassensor für ein Kraftfahrzeug (30) nach Anspruch 1, wobei der Sensor (30) eine Heizung (40) mit ersten und zweiten elektrischen Leitern umfaßt, die zum Betrieb elektrische Energie erfordern, wobei die erste elektrische Klemme erste und zweite Steckerzinken (54) aufweist, die jeweils elektrisch mit den ersten bzw. zweiten elektrischen Leitern verbunden sind, und wobei die zweite elektrische Klemme erste und zweite Buchsenaufnahmen (56, 58) umfaßt, von denen jede in elektrischem Kontakt mit einem zugehörigen Draht (62) steht, um Elektrizität von der externen Quelle zu liefern.

9. Abgassensor für ein Kraftfahrzeug (30) nach Anspruch 8, wobei der Sensor (30) ein Sauerstofferfassungselement (42) mit einer Elektrode umfaßt, wobei die erste elektrische Klemme ferner eine dritte Stekkerzinke (54) umfaßt, die in elektrischem Kontakt mit der Elektrode des Sauerstofferfassungselements steht, wobei die zweite elektrische Klemme ferner eine dritte Buchsenaufnahme (56, 58) umfaßt, die in elektrischem Kontakt mit einem dritten Draht steht, um Elektrizität von der externen Quelle zu liefern, und wobei alle Steckerzinken (54) und alle Buchsenaufnahmen (56, 58) derart aufgebaut und angeordnet sind, daß mindestens eine von den ersten und zweiten elektrischen Klemmen in bezug auf die andere entfernbar ist.

## Revendications

1. Capteur (30) de gaz d'échappement d'automobile comprenant : un composant (42) demandant une énergie électrique pour fonctionner ; une première borne électrique (50) en contact électrique avec ledit composant (42), et une seconde borne électrique (60) en contact électrique avec un fil (62) pour fournir l'énergie électrique provenant d'une source extérieure, l'une desdites bornes (50, 60) étant pourvue d'une fiche mâle (54) et les autres desdites bornes étant pourvues d'une prise de courant femelle (56, 58) ; et ladite fiche mâle (54) et ladite prise de courant femelle (56, 58) étant structurées et aménagées de telle façon qu'au moins l'une desdites bornes (56, 60) peut être enlevée de façon sélective par rapport à l'autre ; dans lequel
le capteur (30) comprend un couvercle (38), un boîtier (32, 34) et un écran inférieur (36), ledit composant (42) étant porté dans ledit boîtier (32, 34) ; ladite seconde borne (60) est logée dans ledit couvercle (38) et ladite première borne (50) est logée dans ledit boîtier (32, 34) ; caractérisé en ce que ledit couvercle (38) possède un doigt de verrouillage élastique (70) à une extrémité inférieure de celui-ci ; ledit boîtier (32, 34) possède une nervure (68) à une extrémité supérieure de celui-ci ; et le doigt de verrouillage élastique (70) du couvercle (38) est monté par pression autour de la nervure (68) du boîtier (32, 34) lorsque les première et seconde bornes (50, 60) sont en contact électrique l'une avec l'autre.

2. Capteur (30) de gaz d'échappement d'automobile selon la revendication 1, dans lequel le capteur (30) comprend un élément de maintien (44, 46) pour maintenir en permanence ladite fiche mâle (54) dans une position prédéterminée.

3. Capteur (30) de gaz d'échappement d'automobile selon la revendication 2, dans lequel ledit élément de maintien est un scellement en verre (44) entourant une partie de ladite fiche mâle (54).

4. Capteur (30) de gaz d'échappement d'automobile selon la revendication 3, dans lequel ledit scellement en verre (44) comprend du verre fondu de borisilicate d'alumine.

5. Capteur (30) de gaz d'échappement d'automobile selon l'une quelconque des revendications précédentes, dans lequel ladite prise de courant femelle (56, 58) comprend en outre une première partie (60) fixée sur ledit fil (62).

6. Capteur (30) de gaz d'échappement d'automobile selon la revendication 1, dans lequel ladite fiche mâle (54) possède une forme sensiblement cylindrique et ladite prise de courant femelle (56, 58) définit une partie creuse (58) destinée à recevoir une partie de ladite fiche mâle (54).

7. Capteur (30) de gaz d'échappement d'automobile selon la revendication 1, dans lequel ladite fiche mâle (50) possède une zone dont la section a une forme sensiblement rectangulaire et ladite prise de courant femelle (56, 58) définit une partie creuse (58) pour recevoir au moins une partie de ladite fiche mâle (50).

8. Capteur (30) de gaz d'échappement d'automobile selon la revendication 1, dans lequel le capteur (30) comprend un dispositif de chauffage (40) possédant un premier et un second conducteurs électriques demandant de l'énergie électrique pour fonctionner ; ladite première borne électrique possède une première et une seconde fiches mâles (54) connectées électriquement respectivement auxdits premier et second conducteurs électriques; et ladite seconde borne électrique comprend une première et une seconde prises de courant femelles (56, 58), chacune d'entre elles étant en contact électrique avec un fil associé (62) pour fournir de l'électricité provenant de ladite source extérieure.

9. Capteur (30) de gaz d'échappement d'automobile selon la revendication 8, dans lequel le capteur (30) comprend un élément de détection d'oxygène (42) possédant une électrode ; ladite première borne électrique comprend en outre une troisième fiche mâle (54) en contact électrique avec ladite électrode formant élément de détection d'oxygène ; ladite seconde borne électrique comprend en outre une troisième prise de courant femelle (56, 58) en contact électrique avec un troisième fil pour fournir de l'électricité provenant de ladite source extérieure, et dans lequel toutes les fiches mâles (54) et toutes les prises de courant femelles (56, 58) sont structurées et aménagées de telle façon qu'au moins l'une desdites première et seconde bornes électriques peut être enlevée par rapport à l'autre.
